# EUROPEAN PATENT APPLICATION

(11) **EP 4 819 753 A1**
(43) Date of publication of application: **07.10.2026**
(21) Application number: 24902945.5
(22) Date of filing: 13.12.2024
(51) Int. Cl.: H04W 76/10

(54) **COMMUNICATION METHOD AND COMMUNICATION APPARATUS**

(30) Priority: 15.12.2023 CN 202311735293
(71) Applicant: Huawei Technologies Co., Ltd., Shenzhen, Guangdong 518129 (CN)
(72) Inventor: LI, Meng, Shenzhen, Guangdong 518129 (CN); YING, Jiangwei, Shenzhen, Guangdong 518129 (CN); ZHU, Fangyuan, Shenzhen, Guangdong 518129 (CN)
(74) Representative: Goddar, Heinz J.
(86) International application number: PCT/CN2024/139064
(87) International publication number: WO 2025/124528

(57) **Abstract**

This application provides a communication method and a communication apparatus. In the method, a sensing function network element may configure sensing service information, thereby establishing a transmission channel between the sensing function network element and an application function network element. After the transmission channel between the sensing function network element and the application function network element is established, the transmission channel may be used to transmit sensing services, thereby providing a sensing capability in an operator network.

## Description

This application claims priority to Chinese Patent Application No. 202311735293.3, filed with the China National Intellectual Property Administration on December 15, 2023, and entitled "Communication Method and Communication Apparatus," which is hereby incorporated by reference in its entirety.

### TECHNICAL FIELD

This application relates to the field of communication technologies, and in particular, to a communication method and a communication apparatus.

### BACKGROUND

Sensing technology is based on air interface resources such as radar and millimeter waves. It collects the content of reflected sensing signals (i.e., sensing information) and further processes this sensing information to obtain the required information. Therefore, sensing technology can be combined with communication technology, utilizing the functions, spectrum, and signals of existing communication devices to send sensing signals, thereby providing sensing capabilities within an operator's network. However, there is currently no discussion on how to provide sensing capabilities (i.e., how to provide sensing capabilities through terminals or base stations) in operator networks, which remains an unresolved issue.

### SUMMARY

This application provides a communication method and a communication apparatus. The method provides a sensing function network element that implements a sensing function, where the sensing function network element can determine sensing service information, thereby providing a sensing capability in an operator network.

According to a first aspect, this application provides a communication method. For example, the communication method may be performed by a sensing function network element, or a component (such as a processor, a chip, or a chip system) of the sensing function network element, or may be a logical module capable of implementing all or a part of the sensing function. The sensing function network element receives a first request message from an application function network element, where the first request message includes at least one of sensing service area information, sensing service requirement information, or address information of the application function network element. The sensing function network element determines sensing service information based on the first request message, where the sensing service information includes at least one of the sensing service requirement information, the address information of the application function network element, list information of authorized terminals, sensing quality description information, identification information of the sensing service, or identification information of a sensing data transmission channel.

In this method, the sensing function network element may configure the sensing service information, thereby establishing a transmission channel between the sensing function network element and the application function network element. Moreover, after the transmission channel between the sensing function network element and the application function network element is established, the transmission channel can be used to transmit sensing services, thereby enabling the capability of providing sensing services within an operator's network based on the sensing function network element.

In a possible implementation, the sensing function network element receives a second request message from an application function network element, where the second request message is used to request identification information of a sensing service. The sensing function network element generates identification information for the sensing service, where the identification information of the sensing service is used to identify the sensing service or the sensing session corresponding to the sensing service. The sensing function network element sends a second response message to the application function network element, where the second response message includes at least one of the identification information of the sensing service or the address information of the sensing function network element.

In this implementation, the sensing function network element may generate identification information for a sensing service based on a second request message that is used only to request the identification information of the sensing service, thereby identifying the sensing service or the sensing session corresponding to the sensing service. This facilitates each network element to identify different sensing services or the sensing sessions corresponding to the sensing services based on the identification information of the sensing service, thereby achieving the sensing function.

In a possible implementation, the sensing function network element generates identification information for the sensing service based on the first request message, where the identification information for the sensing service is used to identify the sensing service or the sensing session corresponding to the sensing service. The sensing function network element sends a first response message to the application function network element, where the first response message includes at least one of the identification information for the sensing service or the address information of the sensing function network element.

In this implementation, the first request message is used both to request the sensing function and to request the identification information of the sensing service. Therefore, the sensing function network element can generate the identification information of the sensing service based on the first request message, thereby identifying the sensing service or the sensing session corresponding to the sensing service. This facilitates the network element to identify different sensing services or the sensing sessions corresponding to the sensing services based on the identification information of the sensing service, thereby achieving the sensing function.

In a possible implementation, the sensing function network element sends a third request message to the first session management function network element, where the third request message is used to request the first session management function network element to generate sensing quality description information and configure corresponding transmission, and the first session management function network element is determined based on the sensing service area information; the first session management function network element has a sensing function. The sensing function network element receives a third response message from the first session management function network element, where the third response message includes at least one of the sensing quality description information or the identification information of the sensing data transmission channel.

In this implementation, the sensing function network element may request the first session management function network element that has the sensing function to generate sensing quality description information and configure the corresponding transmission, thereby enabling the first session management function network element to allocate a sensing data transmission channel and determine the sensing quality description information that ensures the transmission quality. This approach facilitates the implementation of the sensing function while ensuring the transmission quality of the sensing data.

In a possible implementation, the sensing function network element receives a fourth request message from a second session management function network element, where the fourth request message includes identification information of the sensing service and identification information of a terminal associated with the second session management function network element. The sensing function network element then sends a fourth response message to the second session management function network element, where the fourth response message includes sensing service information.

In this implementation, when the terminal requests to perform sensing service transmission, the second session management function network element that manages the terminal may request the sensing function network element to establish a sensing resource (for example, obtain sensing service information or address information of the sensing function network element), thereby facilitating the terminal and multiple network elements (such as the sensing function network element and the second session management function network element) to jointly achieve the sensing function.

In a possible implementation, the first request message further includes list information of authorized terminals.

In a possible implementation, the sensing function network element performs authentication processing on the terminal based on the identification information of the terminal associated with the second session management function network element and the list information of authorized terminals.

In the foregoing implementation, the sensing function network element may further perform authentication processing on a terminal that requests transmission of the sensing service. For example, the sensing function network element may compare the identification information of the terminal associated with the second session management function network element with the list information of authorized terminals, which helps identify whether the terminal is authorized to implement the sensing function.

According to a second aspect, this application provides a communication method. For example, the communication method may be performed by a sensing function network element, or a component (such as a processor, a chip, or a chip system) of the sensing function network element, or may be a logical module capable of implementing all or a part of the sensing function. The sensing function network element obtains identification information of a terminal, and performs authentication processing on the terminal based on the identification information of the terminal.

In this method, the sensing function network element implements the sensing function while also performing the function of authenticating the terminal, determining whether the terminal is authorized to perform the sensing function, thereby enabling the implementation of the sensing function within the operator's network.

In one possible implementation, the sensing function network element receives a fourth request message from a second session management function network element, where the fourth request message includes identification information of the sensing service and identification information of a terminal associated with the second session management function network element.

In this implementation, when the terminal requests to perform a sensing service transmission, the second session management function network element that manages the terminal may request the establishment of sensing resources (for example, obtaining sensing service information or address information of the sensing function network element) from the sensing function network element, thereby facilitating the terminal and multiple network elements (such as the sensing function network element and the second session management function network element) to jointly achieve the sensing function.

In a possible implementation, the sensing function network element compares the identification information of the terminal with a list of authorized terminals to determine whether the terminal is authorized to collect sensing data. The list of authorized terminals is preconfigured by the sensing function network element, or is received by the sensing function network element from an application function network element.

In a possible implementation, the sensing function network element compares the identification information of the terminal with the list information of authorized terminals to determine that the terminal is not authorized to collect sensing data; the list information of authorized terminals is preconfigured by the sensing function network element, or is received by the sensing function network element from an application function network element. The sensing function network element then sends first indication information to a second session management network element, where the first indication information indicates that the terminal is not authorized to collect sensing data.

In the foregoing implementation, the sensing function network element may determine, based on the list information of authorized terminals, whether the identification information of the terminal belongs to the identification information in the list information of authorized terminals, thereby determining whether the terminal is authorized to collect sensing data. Optionally, if the terminal is not authorized to collect the sensing data, the sensing function network element may further feed back first indication information indicating that the terminal is not authorized to collect the sensing data to the second session management function network element that manages the terminal.

According to a third aspect, this application provides a communication method. For example, an application function network element may perform the communication method, or a component (such as a processor, a chip, or a chip system) of the application function network element may perform the communication method, or a logical module capable of implementing all or a part of the application function may perform the communication method. The application function network element sends a first request message to a sensing function network element, where the first request message includes at least one of sensing service area information, sensing service requirement information, or address information of the application function network element. The application function network element stores at least one of the sensing service area information, the sensing service requirement information, or the address information of the application function network element.

In this method, the application function network element may request the establishment of a transmission channel between the application function network element and the sensing function network element from the sensing function network element, thereby enabling the provision of sensing capabilities within an operator's network.

In a possible implementation, the application function network element sends a second request message to the sensing function network element, where the second request message is used to request identification information of a sensing service. The application function network element receives a second response message from the sensing function network element, where the second response message includes at least one of the identification information of the sensing service or address information of the sensing function network element.

In this implementation, the application function network element sends a second request message for requesting identification information of a sensing service, thereby requesting the sensing function network element to generate identification information for the sensing service, which is used to identify the sensing service or the sensing session corresponding to the sensing service. This facilitates each network element to identify different sensing services or sensing sessions corresponding to the sensing service based on the identification information of the sensing service, thereby achieving the sensing function.

In a possible implementation, the application function network element sends a fifth request message to the network exposure function network element, where the fifth request message includes the list information of the authorized terminals.

In a possible implementation, the application function network element sends a sixth request message to the policy control function network element, where the sixth request message includes at least one of the identification information of the sensing service or the list of terminals authorized to perform device-side sensing.

In the foregoing implementation, the application function network element may send the list information of the authorized terminals to the network exposure function network element or the policy control function network element, thereby facilitating other network elements to obtain the list information of the authorized terminals from the network exposure function network element.

In a possible implementation, the application function network element sends a first notification message to the terminal, where the first notification message includes at least one of identification information of a sensing service or address information of a sensing function network element.

In this implementation, the application function network element may send identification information of a sensing service and/or address information of a sensing function network element to the terminal, which facilitates the establishment of a transmission channel between the terminal and the sensing function network element for transmitting sensing data.

According to a fourth aspect, this application provides a communication method. For example, the communication method may be performed by a terminal, or a component (such as a processor, a chip, or a chip system) of the terminal, or may be a logical module capable of implementing all or some functions of the terminal. The terminal receives a first notification message from an application function network element, where the first notification message includes at least one of identification information of a sensing service or address information of a sensing function network element. The terminal then sends sensing data.

In this method, the terminal can receive identification information of a sensing service and/or address information of a sensing function network element, which facilitates the establishment of a transmission channel between the terminal and the sensing function network element for transmitting sensing data, thereby enabling the sensing function on an operator's network.

In a possible implementation, the terminal sends sensing data to the sensing function network element through a first session used for interaction with the application function network element.

In this implementation, the terminal may send the sensing data by using the first session that has been established with the application function network element, without the need to reestablish a session, which helps improve processing efficiency.

In a possible implementation, the terminal sends a seventh request message to the second session management network element, where the seventh request message includes at least one of the terminal's identification information, the identification information of the sensing service, or the address information of the sensing function network element. The terminal receives a seventh response message, where the seventh response message includes at least one of the identification information of the sensing service, the sensing service requirement information, or the address information of the sensing function network element.

In this implementation, the terminal may request the associated second session management network element to obtain identification information of the sensing service, which facilitates the establishment of a transmission channel for transmitting sensing data between the terminal and the sensing function network element, thereby enabling the sensing function on an operator's network.

According to a fifth aspect, this application provides a communication method. For example, the communication method may be performed by a second session management function network element, or a component (such as a processor, a chip, or a chip system) of the second session management function network element, or may be a logical module capable of implementing all or a part of the session management function. The second session management function network element sends a fourth request message to a sensing function network element, where the fourth request message includes identification information of a sensing service and/or identification information of a terminal associated with the second session management function network element. The second session management function network element receives a fourth response message from the sensing function network element, where the fourth response message includes sensing service information.

In this method, the second session management function network element may request the sensing function network element to obtain sensing service information and/or address information of the sensing function network element, thereby facilitating the establishment of a transmission channel for transmitting sensing data between the terminal associated with the second session management function network element and the sensing function network element, thus enabling the sensing function to be implemented in the operator's network.

In a possible implementation, the identification information of the terminal is used by the sensing function network element to perform authentication processing on the terminal.

In a possible implementation, the second session management function network element receives first indication information from the sensing function network element, where the first indication information indicates that the terminal is not authorized to collect sensing data.

In the foregoing implementation, if the sensing function network element determines, when performing authentication processing on the terminal, that the terminal is not authorized to collect sensing data, the second session management function network element may receive the first indication information, thereby determining that the terminal is not authorized to collect sensing data.

According to a sixth aspect, this application provides a communication apparatus. The communication apparatus may be a sensing function network element, or a component (for example, a processor, a chip, or a chip system) of a sensing function network element, or an apparatus that can be used in conjunction with a sensing function network element. In a possible implementation, the communication apparatus may include a function module, where the function module may be a hardware circuit, or may be software, or may be implemented through a combination of a hardware circuit and software.

In a possible implementation, the communication apparatus includes a communication unit and a processing unit. The communication unit is configured to receive a first request message from an application function network element, where the first request message includes at least one of sensing service area information, sensing service requirement information, or address information of the application function network element. The processing unit is configured to determine sensing service information based on the first request message, where the sensing service information includes at least one of the sensing service requirement information, the address information of the application function network element, list information of authorized terminals, sensing quality description information, identification information of the sensing service, or identification information of a sensing data transmission channel.

In a possible implementation, the communication unit is configured to receive a second request message from an application function network element, where the second request message is used to request identification information of a sensing service. The processing unit is configured to generate identification information of the sensing service, where the identification information of the sensing service is used to identify the sensing service or a sensing session corresponding to the sensing service. The communication unit is further configured to send a second response message to the application function network element, where the second response message includes at least one of the identification information of the sensing service or the address information of the sensing function network element.

In a possible implementation, the processing unit is configured to generate identification information for the sensing service based on the first request message, where the identification information for the sensing service is used to identify the sensing service or the sensing session corresponding to the sensing service. The communication unit is configured to send a first response message to an application function network element, where the first response message includes at least one of the identification information for the sensing service or the address information of the sensing function network element.

In a possible implementation, the communication unit is configured to send a third request message to a first session management function network element, where the third request message is used to request the first session management function network element to generate sensing quality description information and configure corresponding transmission, and the first session management function network element is determined based on the sensing service area information; the first session management function network element has a sensing function. The communication unit is further configured to receive a third response message from the first session management function network element, where the third response message includes at least one of the sensing quality description information or the identification information of the sensing data transmission channel.

In a possible implementation, the communication unit is configured to receive a fourth request message from a second session management function network element, wherein the fourth request message includes identification information of the sensing service and identification information of a terminal associated with the second session management function network element. The communication unit is further configured to send a fourth response message to the second session management function network element, wherein the fourth response message includes the sensing service information.

In a possible implementation, the communication unit is configured to receive list information of authorized terminals from an application function network element.

In a possible implementation, the processing unit is configured to perform authentication processing on the terminal based on the identification information of the terminal associated with the second session management function network element.

According to a seventh aspect, this application provides a communication apparatus. The communication apparatus may be a sensing function network element, or a component (for example, a processor, a chip, or a chip system) of a sensing function network element, or an apparatus that can be used in a matching manner with the sensing function network element. In a possible implementation, the communication apparatus may include a function module, where the function module may be a hardware circuit, may be software, or may be implemented by a combination of a hardware circuit and software.

In a possible implementation, the communication apparatus includes a communication unit and a processing unit. The communication unit is configured to obtain identification information of a terminal. The processing unit is configured to perform authentication processing on the terminal based on the identification information of the terminal.

In a possible implementation, the communication unit is configured to receive a fourth request message from a second session management function network element, wherein the fourth request message includes identification information of a sensing service and identification information of a terminal associated with the second session management function network element.

In a possible implementation, the processing unit is configured to compare the identification information of the terminal with the list information of authorized terminals to determine that the terminal is authorized to collect sensing data. The list information of the authorized terminals is preconfigured by the sensing function network element, or is received by the sensing function network element from the application function network element.

In a possible implementation, the processing unit is configured to compare the identification information of the terminal with the list information of authorized terminals to determine that the terminal is not authorized to collect sensing data; where the list information of the authorized terminals is preconfigured by the sensing function network element, or is received by the sensing function network element from the application function network element. The communication unit is configured to send first indication information to a second session management network element, wherein the first indication information indicates that the terminal is not authorized to collect sensing data.

According to an eighth aspect, this application provides a communication apparatus. The communication apparatus may be an application function network element, or a component (such as a processor, a chip, or a chip system) of an application function network element, or an apparatus that can be used in a matching manner with an application function network element. In a possible implementation, the communication apparatus may include a function module, where the function module may be a hardware circuit, software, or a combination of a hardware circuit and software for implementation.

In a possible implementation, the communication apparatus includes a communication unit and a processing unit. The communication unit is configured to send a first request message to a sensing function network element, where the first request message includes at least one of sensing service area information, sensing service requirement information, or address information of the application function network element. The processing unit is configured to store at least one of the sensing service area information, the sensing service requirement information, or the address information of the application function network element.

In a possible implementation, the communication unit is configured to send a second request message to a sensing function network element, where the second request message is used to request identification information of a sensing service. The communication unit is further configured to receive a second response message from the sensing function network element, where the second response message includes at least one of the identification information of the sensing service or address information of the sensing function network element.

In a possible implementation, the communication unit is configured to send a fifth request message to the network exposure function network element, where the fifth request message includes list information of authorized terminals.

In a possible implementation, the communication unit is configured to send a sixth request message to the policy control function network element, where the sixth request message includes at least one of identification information of a sensing service or a list of terminals authorized to perform device-side sensing.

In a possible implementation, the communication unit is configured to send a first notification message to the terminal, where the first notification message includes at least one of identification information of a sensing service or address information of a sensing function network element.

According to a ninth aspect, this application provides a communication apparatus. The communication apparatus may be a terminal, a component (for example, a processor, a chip, or a chip system) of a terminal, or an apparatus that can be used in a matching manner with a terminal. In a possible implementation, the communication apparatus may include a function module, where the function module may be a hardware circuit, may be software, or may be implemented through a combination of a hardware circuit and software.

In a possible implementation, the communication apparatus includes a communication unit and a processing unit. The communication unit is configured to receive a first notification message from an application function network element, where the first notification message includes at least one of identification information of a sensing service or address information of a sensing function network element. The communication unit is also configured to send sensing data.

In a possible implementation, the communication unit is configured to send sensing data to the sensing function network element through a first session used for interaction with the application function network element.

In a possible implementation, the communication unit is configured to send a seventh request message to a second session management network element, where the seventh request message includes at least one of identification information of the terminal, identification information of a sensing service, or address information of a sensing function network element. The communication unit is further configured to receive a seventh response message, where the seventh response message includes at least one of identification information of the sensing service, sensing service requirement information, or address information of the sensing function network element.

According to a tenth aspect, this application provides a communication apparatus. The communication apparatus may be a session management function network element, or a component (for example, a processor, a chip, or a chip system) of a session management function network element, or an apparatus that can be used in conjunction with a session management function network element. In a possible implementation, the communication apparatus may include a function module, where the function module may be a hardware circuit, may be software, or may be implemented by a combination of a hardware circuit and software.

In a possible implementation, the communication apparatus includes a communication unit and a processing unit. The communication unit is configured to send a fourth request message to a sensing function network element, where the fourth request message includes identification information of a sensing service and identification information of a terminal associated with a second session management function network element. The communication unit is further configured to receive a fourth response message from the sensing function network element, where the fourth response message includes sensing service information.

In a possible implementation, the communication unit is configured to receive first indication information from a sensing function network element, where the first indication information indicates that the terminal is not authorized to collect sensing data.

For the sixth aspect to the tenth aspect, as an example, the processing unit may be a processor, and the communication unit may be a transceiver unit, a transceiver, or a communication interface. It may be understood that when the communication apparatus is a communication device (for example, a terminal or a network device), the communication unit may be a transceiver (for example, the transceiver includes a transmitter and a receiver) in the communication apparatus, which may be implemented through an antenna, a feeder, a codec, or other components in the communication apparatus. Alternatively, if the communication apparatus is a chip disposed in a device, the processing unit may be a processing circuit, a logic circuit, or the like in the chip, and the communication unit may be an input/output interface of the chip, for example, an input/output circuit or a pin.

According to an eleventh aspect, this application provides a communication apparatus, including a processor, configured to execute instructions; optionally, the communication apparatus further includes a memory, where the memory is configured to store the instructions, and when the instructions are executed by the processor, the communication apparatus is enabled to implement at least one of the first aspect to the fifth aspect and the method in any one of the possible implementations of the first aspect to the fifth aspect. Optionally, the processor and the memory are coupled.

According to a twelfth aspect, this application provides a communications system, where the communications system includes at least one of the apparatuses or devices according to the sixth aspect to the tenth aspect, so that the at least one of the apparatuses or devices performs the method in the first aspect to the fifth aspect and the method in any one of the possible implementations of the first aspect to the fifth aspect.

According to a thirteenth aspect, this application provides a computer-readable storage medium, where the computer-readable storage medium stores instructions, and when the instructions are run on a computer, the computer is enabled to perform the method in the first aspect to the fifth aspect and the method in any one of the possible implementations of the first aspect to the fifth aspect.

According to a fourteenth aspect, this application provides a computer program product, including an instruction. When the instruction is run on a computer, the computer is enabled to perform the method in the first aspect to the fifth aspect and any one of the possible implementations of the first aspect to the fifth aspect.

According to a fifteenth aspect, this application provides a chip, where the chip includes a processor (or a logic circuit). Optionally, the chip may further include a communication interface (or an interface), configured to implement the method in the first aspect to the fifth aspect and any one of the possible implementations of the first aspect to the fifth aspect. In a possible implementation, if the chip is a minimum processing unit in an entire system, the chip may be a processor, or may include a processor and a memory, or may further include a processor, a memory, and a transceiver, configured to implement the method in the first aspect to the fifth aspect and any one of the possible implementations of the first aspect to the fifth aspect.

According to a sixteenth aspect, this application provides a chip system. The chip system includes a processor and an interface. Optionally, the chip system may further include a memory, configured to implement the method in the first aspect to the fifth aspect and any one of the possible implementations of the first aspect to the fifth aspect. The chip system may include a chip, or may include the chip and another discrete component.

### BRIEF DESCRIPTION OF DRAWINGS

FIG. 1 is a schematic diagram of a network architecture based on a service-based architecture;
FIG. 2 is a schematic diagram of a network architecture based on a point-to-point interface;
FIG. 3 is a schematic flowchart of a communication method according to this application;
FIG. 4 is a schematic flowchart of implementing a sensing function in an operator network by means of interaction at an application layer and reusing a PDU session establishment/modification procedure according to this application;
FIG. 5 is a schematic flowchart of implementing a sensing function in an operator network by means of interaction at a network layer and by reusing a PDU session establishment/modification procedure according to this application;
FIG. 6 is a schematic diagram of a communication apparatus according to this application;
FIG. 7 is a schematic diagram of another communication apparatus according to this application.

### DESCRIPTION OF EMBODIMENTS

In the embodiments of this application, "/" may indicate an "or" relationship between associated objects. For example, A/B may indicate A or B. "and/or" may be used to describe three relationships between associated objects. For example, A and/or B may indicate the following three cases: Only A exists, both A and B exist, or only B exists, where A and B may be singular or plural.

In the embodiments of this application, terms such as "first" and "second" may be used to distinguish between technical features that have the same or similar functions. These terms such as "first" and "second" do not limit the quantity or execution sequence, and these terms such as "first" and "second" do not necessarily indicate any difference. In the embodiments of this application, the terms such as "example" or "for example" are used to indicate an example, an illustration, or a description. Any embodiment or design scheme described as "an example" or "for example" should not be construed as being more preferred or having more advantages than other embodiments or design schemes. The use of the terms such as "example" or "for example" is intended to present a related concept in a specific manner for ease of understanding.

The terms "sending" and "receiving" in the embodiments of this application indicate a direction of signal transmission. For example, "sending information to a terminal" may be understood as that a destination end of the information is the terminal device, and may include directly sending the information through an air interface, or may include indirectly sending the information through an air interface by another unit or module. "Receiving information from a network device" may be understood as that a source end of the information is the network device, and may include directly receiving the information from the network device through an air interface, or may include indirectly receiving the information from the network device through an air interface from another unit or module. "Sending" may also be understood as "output" of a chip interface, and "receiving" may also be understood as "input" of a chip interface.

In other words, the sending and receiving may be performed between devices, for example, between a network device and a terminal device, or may be performed within a device, for example, through a bus, wiring, or interface, between components, between modules, between chips, or between software or hardware modules within the device.

It is understandable that information may undergo necessary processing, such as encoding and modulation, between the source end and the destination end where the information is sent, but the destination end can understand the valid information from the source end. Similar expressions in this application can be understood in a similar manner, and no further explanation will be provided.

In the embodiments of this application, "indication" may include direct indication and indirect indication, or may include explicit indication and implicit indication. Information indicated by some information (for example, the indication information described below) is referred to as to-be-indicated information. In a specific implementation process, there are many ways to indicate the to-be-indicated information. For example, but not limited to, the to-be-indicated information may be directly indicated, such as the to-be-indicated information itself or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, while other parts of the to-be-indicated information are known or pre-agreed upon. For example, the indication of specific information may be implemented by using a pre-agreed (for example, predefined in a protocol) arrangement order of the information, thereby reducing the indication overhead to some extent. This application does not limit the specific manner of indication. It may be understood that, for a sender of the indication information, the indication information may be used to indicate the to-be-indicated information, and for a receiver of the indication information, the indication information may be used to determine the to-be-indicated information.

The technical solutions in the embodiments of this application will be described below with reference to the accompanying drawings in the embodiments of this application.
I. For ease of understanding, the definitions of related terms involved in this application are described in detail below:

### 1. Network Architecture:

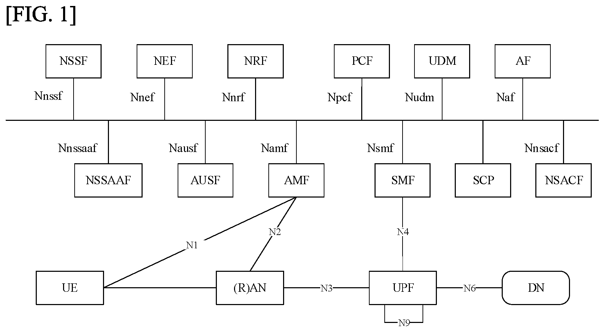

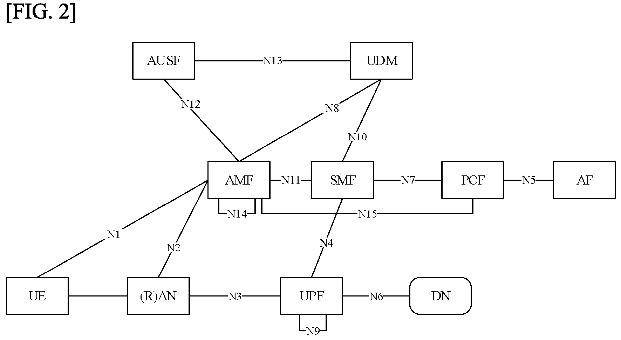

The communication method provided in this application may be applied to the network architecture shown in FIG. 1 or FIG. 2. For example, FIG. 1 is a schematic diagram of a network architecture based on a service-based architecture, and FIG. 2 is a schematic diagram of a network architecture based on a point-to-point interface. The network architecture shown in FIG. 1 or FIG. 2 includes three parts, namely, a terminal device part, a data network (data network, DN), and an operator network part. It should be noted that the main difference between FIG. 1 and FIG. 2 lies in the fact that the interfaces between the network elements in FIG. 2 are point-to-point interfaces, rather than service-based interfaces.

The following provides a description of the devices or functional network elements in each of the respective parts.
(1) The communication system in this application may include but is not limited to communication systems of various radio access technologies (radio access technology, RAT), for example, may be a 5G (or referred to as new radio (new radio, NR)) communication system, or may be a transition system between an LTE communication system and a 5G communication system, where the transition system may also be referred to as a 4.5G communication system. Alternatively, the communication system may be a future communication system, for example, a sixth generation (6th generation, 6G) system or even a seventh generation (7th generation, 7G) system. The network architecture and service scenario described in embodiments of this application are intended to describe the technical solutions in embodiments of this application more clearly, and do not constitute a limitation on the technical solutions provided in embodiments of this application. A person of ordinary skill in the art may know that with evolution of the communication network architecture and emergence of new service scenarios, the technical solutions provided in embodiments of this application are also applicable to similar technical problems.
(2) A terminal, also referred to as a terminal device (terminal), user equipment (user equipment, UE), mobile station (mobile station, MS), mobile terminal (mobile terminal, MT), or the like, is a device that provides voice and/or data connectivity to a user. For example, the terminal may be a handheld device, a vehicle-mounted device, or the like with a wireless connection function. Currently, some examples of terminals include: a mobile phone (mobile phone), a tablet computer, a notebook computer, a palmtop computer, a mobile internet device (MID), a wearable device, an unmanned aerial vehicle (UAV), a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal in a 5G network, a terminal in a future evolved network, a terminal in a future communications system, or the like.
(3) The operator network may include one or more of the following network elements: an authentication server function (AUSF) network element, a network exposure function (NEF) network element, a policy control function (PCF) network element, a unified data management (UDM) network element, a unified data repository (UDR) network element, a network repository function (NRF) network element, an application function (AF) network element (also referred to as an application server), an access and mobility management function (AMF) network element, a session management function (SMF) network element, a radio access network (RAN), a user plane function (UPF) network element, a sensing function (SF), and the like. Optionally, in the operator network, the parts other than the radio access network may be referred to as a core network part.

The RAN is configured to implement a radio-related function, including a RAN node (or device) that enables a terminal to access a radio network, and may also be referred to as a base station. For example, examples of some RAN nodes are: a next generation NodeB (the next generation Node B, gNB), a transmission reception point (transmission reception point, TRP), and an evolved Node B (evolved Node B, eNB), a radio network controller (RNC), a Node B (Node B, NB), a base station controller (BSC), a base transceiver station (base transceiver station, BTS), and a home base station (e.g., home evolved NodeB, or home NodeB, HNB), a base band unit (base band unit, BBU), or a wireless fidelity (wireless fidelity, Wifi) access point (access point, AP), a satellite in a satellite communication system, a wireless controller in a cloud radio access network (cloud radio access network, CRAN) scenario, a wearable device, an unmanned aerial vehicle, or a device in the internet of vehicles (e.g., a vehicle to everything (vehicle to everything, V2X) device), or a communications device in device to device (device to device, D2D) communication, or the like. Optionally, the RAN node may include a centralized unit (centralized unit, CU) node, a distributed unit (distributed unit, DU) node, or a RAN device that includes a CU node and a DU node. A RAN device that includes a CU node and a DU node splits protocol layers of an eNB in a long term evolution (long term evolution, LTE) system, some protocol layer functions are centrally controlled by the CU, and some or all protocol layer functions are distributed in the DU. The CU centrally controls the DU. In some deployments of the network device, the CU may be further divided into a CU-control plane (control plane, CP), a CU-user plane (user plane, UP), and the like. In another possible implementation, the network device may alternatively be an antenna unit (radio unit, RU) or the like. In still another possible implementation, the network device may alternatively be an open radio access network (open radio access network, ORAN) architecture, or the like. A specific type of the network device is not limited in this application. For example, when the network device uses the ORAN architecture, the network device shown in this embodiment of this application may be an access network device in the ORAN, a module in the access network device, or the like. In the ORAN system, the CU may also be referred to as an open central unit (open CU, O-CU), the DU may also be referred to as an open distribution unit (O-DU), and the CU-DU may also be referred to as an open central unit-distribution unit (O-CU-DU). The CU-UP may also be referred to as an open central unit-user plane (O-CU-UP), and the RU may also be referred to as an open antenna unit (O-RU).

The AMF is responsible for mobility management of a user, including functions such as mobility status management, temporary user identity allocation, and user authentication and authorization. The SMF is responsible for UP network element selection, UP network element reselection, IP address allocation, bearer establishment, modification, and release, and QoS control. The UDM manages the subscription data and notifies a corresponding network element when the subscription data is modified. The UDR is used to store and search for subscription data, policy data, and common architecture data, for the UDM, PCF, and NEF to obtain related data. The UDR must provide different data access authentication mechanisms for different types of data, such as subscription data and policy data, to ensure data access security. The UDR must be able to return a failure response with a proper cause value to the invalid service-based operation or data access request. The AF provides an application layer service for the UE. When providing the service for the UE, the AF has requirements on quality of service (quality of service, QoS) and a charging policy (charging policy), and needs to notify the network. The AF also needs application-related information fed back by the core network. The UPF supports all or some of the following functions: interconnecting a protocol data unit (protocol data unit, PDU) session to a data network; packet routing and forwarding (for example, supporting forwarding of traffic to the data network after uplink classification (uplink classifier), supporting a branching point (branching point), and supporting a multi-homed PDU (multi-homed PDU) session); packet detection; and the like. The SF supports some or all of the following functions: a session management function for sensing data transmission (e.g., determining QoS for sensing data transmission); managing a sensing accuracy parameter (for example, obtaining, based on a requirement of the AF, sensing accuracy that can be processed on a network side); processing of sensing data (for example, converting sensing measurement data into final target sensing result information); allocating identification information of a sensing service, and the like. Optionally, the sensing function may be an independent network element, or may be a logical function of an existing network element, for example, one of logical functions of a location management function (location management function, LMF) network element. This is not limited in this application. It should be noted that the system architecture and network elements described above are only an example. Actually, this may also be applied to another network architecture and system. This is not limited in this application.

### 2. Integration of Communication and Sensing:

Sensing technology is based on air interface resources such as radar and millimeter waves, which collect reflected sensing signal content (i.e., sensing information) and further process this information to obtain the desired data. Sensing technology can be combined with communication technology (i.e., integration of communication and sensing) primarily for the following reasons:
(1) The coverage of communication devices can meet the requirements of sensing service scenarios, such as areas along highways and airport airspaces;
(2) The main sensing scenarios all have simultaneous communication requirements. For example, in the case of an Unmanned Aerial Vehicle (UAV) scenario, UAV devices also need to communicate and interact with other network elements. Another example is the V2X scenario, where V2X users need to interact with V2X application servers to obtain information such as service parameters and service details.

All of the above factors make the integration of communication and sensing possible. Furthermore, this application utilizes the existing functions of communication devices, the spectrum of communication devices, and the signals of communication devices to transmit sensing signals, thereby enabling the provision of sensing capabilities within an operator's network.

### 3. Sensing Modes:

In the integrated communication and sensing scenario, sensing modes can be categorized into three types: base station-side sensing, device-side sensing, and cooperative sensing. Among these, base station-side sensing refers to the scenario where a base station transmits and receives signals on its own, or where base station A transmits signals and base station B receives them. Device-side sensing refers to the scenario where a UE (User Equipment) transmits and receives signals on its own, or where UE A transmits signals and UE B receives them. Cooperative sensing refers to the scenario where a base station transmits signals and a UE receives them, or where a UE transmits signals and a base station receives them. This application primarily pertains to device-side sensing.

### II. The communication method provided by this application:

1. This application provides a communication method:

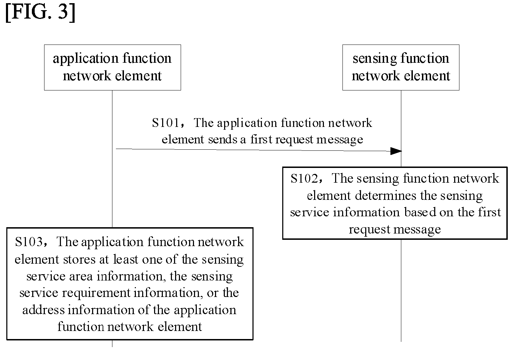

For example, FIG. 3 is a schematic flowchart of a communication method according to this application. The method may be implemented through interaction between an application function network element and a sensing function network element, and the method includes the following steps:
S101: The application function network element sends a first request message to the sensing function network element; correspondingly, the sensing function network element receives the first request message.

For example, the first request message may be a sensing service establishment request message sent by the AF to the SF, where the first request message is used to request the SF to establish a sensing service. The first request message includes at least one of the following: sensing service area information, sensing service requirement information, or address information of the application function network element.
(1) The sensing service area information is used to indicate the target area for sensing. For example, the sensing service area information may include at least one of the following: information at the granularity of a tracking area (TA), information at the granularity of a cell, or information at the granularity of a geographical area or geographical address (geographical address). Optionally, if the sensing service area information is information at the granularity of a geographical area or geographical address, this granularity information needs to be converted into area information that can be recognized by the core network, for example, information at the granularity of a TA or a cell. Optionally, the information of the different granularities mentioned above may be, for example, a location range, such as a location range of a TA, a location range of a cell, or a location range of a specified geographical area; or may be latitude and longitude information, such as latitude and longitude information of a TA, latitude and longitude information of a cell, or latitude and longitude information of a specified geographical area.
(2) The sensing service requirement information is used to indicate a requirement indicator of the sensing service. For example, the sensing service requirement information may include at least one of the following: sensing service quality information, reporting control information, sensing reporting information, or a start time of the sensing service. The sensing service quality information may include, for example, information such as a type of the sensing service (such as an Internet of Vehicles service or an unmanned aerial vehicle detection service that can implement sensing) or a service requirement (such as positioning accuracy information, speed measurement accuracy, sensing resolution, or a delay). The reporting control information may include, for example, information such as a reporting quantity (such as a single reporting or periodic reporting) or a reporting condition (such as triggered reporting or periodic reporting). The sensing reporting information specifically refers to what kind of sensing data the AF requests the core network to report; for example, the sensing reporting information may be point cloud (point cloud) information, where the point cloud information may specifically be a set of points formed by points on an object's reflective surface; or may be information about a measurement result, where the information about the measurement result may specifically be descriptive information about a measured object, such as a speed, a size, a reflected cross-sectional area, or the like; or may be a description of an event, where the event description may specifically be a description of a specific service, for example, for an unmanned aerial vehicle detection service, whether an unauthorized user is detected in a given sensing target area. The start time of the sensing service may be, for example, a specific time value, or a time difference from the current time (for example, the sensing service may start after a certain period of time from the current time).
(3) The address information of the application function network element is used to indicate the destination address for reporting sensing data, or the destination address for the reported sensing information. For example, after a sensing function network element and other related network elements (such as a session management network element) or devices (such as a terminal) collect sensing data, and then need to send the collected sensing data or the collected sensing data that has been further processed to the application function network element, the address of the application function network element serves as the destination address for reporting the sensing data. The address information of the application function network element may be represented, for instance, in the form of an IP address and port number information, or in the form of a fully qualified domain name (FQDN), or in the form of an application identifier (application ID (identity)).

Optionally, the first request message further includes list information of authorized terminals, for example, the list information of authorized terminals is a terminal identifier list (UE ID list). The terminal identifier information (UE ID) may be a generic public subscription identifier (GPSI), or may be a mobile subscriber ISDN (integrated services digital network) number (MSISDN), or may be external group identifier information (e.g., external group ID), or may be an application layer identifier (application layer ID). Optionally, when the list information of authorized terminals is external group identifier information or an application layer identifier, the SF may query a core network element (such as a UDM, etc.) to obtain the corresponding terminal identifier information (e.g., GPSI, SUPI, or MSISDN).

Optionally, if the first request message is used both to request the establishment of a sensing service and to request an SF to allocate an identifier for the sensing service, then after S101, the following operations are also included: the sensing function network element generates identification information for the sensing service based on the first request message; and the sensing function network element sends a first response message to the application function network element, where the first response message includes at least one of the identification information for the sensing service or the address information of the sensing function network element.

The identification information of the sensing service is used to identify the sensing service or the sensing session corresponding to the sensing service. For example, the identification information of the sensing service includes a sensing service identifier (sensing ID), which is used to represent a specific (an operator's internal) sensing service. Optionally, the identification information of the sensing service may be represented by a combination of an operator identifier (PLMN ID) and a sensing service identifier (Sensing service ID). For instance, both the operator identifier and the sensing service identifier may be represented by one or more fields, where each field may be represented by binary, octal, decimal, or hexadecimal numbers. The address information of the sensing function network element is expressed in a manner similar to that of the application function network element. For example, the address information of the sensing function network element may be represented in the form of an IP address and port number information, or in the form of an FQDN (Fully Qualified Domain Name), or in the form of a sensing function identifier (sensing function ID).

Optionally, if the first request message is used to request the establishment of a sensing service, and the application function network element then requests the SF to allocate an identifier for the sensing service through a second request message, then before S101, the following operations are further included: the sensing function network element receives a second request message from the application function network element, where the second request message is used to request identification information for the sensing service; the sensing function network element generates identification information for the sensing service, where the identification information for the sensing service is used to identify the sensing service or the sensing session corresponding to the sensing service; and the sensing function network element sends a second response message to the application function network element, where the second response message includes at least one of the identification information for the sensing service or the address information of the sensing function network element. Optionally, the first request message may include the identification information for the sensing service.

For example, the second request message may be a sensing identifier allocation request message sent by an application function network element to a sensing function network element, where the sensing identifier allocation request message includes the address information of the application function network element. For an illustrative description of the address information of the application function network element, reference may be made to the corresponding description provided earlier, and no further details will be given here.

Optionally, after S101, the following steps are further included:
The sensing function network element sends a third request message to the first session management function network element, where the third request message is used to request the first session management function network element to generate sensing quality description information and configure corresponding transmission, where the first session management function network element is determined based on the sensing service area information; the first session management function network element has a sensing function;
The sensing function network element receives a third response message from the first session management function network element, wherein the third response message includes at least one of sensing quality description information or identification information of a sensing data transmission channel.

The first session management function network element refers to an SMF (such as a sensing-SMF) that has a sensing function, where the sensing-SMF is configured to generate sensing quality description information and configure corresponding transmission.
(1) The sensing quality description information is used to indicate the QoS information corresponding to the transmission channel for transmitting the sensing data, also referred to as QoS description information (QoS profile). For example, the sensing quality description information may include at least one of the following: QoS level (e.g., 5QI), allocation and retention priority (ARP), guaranteed bit rate (GBR), or maximum bit rate (MBR), and the like. Optionally, the sensing quality description information and the sensing service requirement information may be two independent information elements (IEs), or they may be a single information element, for example, where the sensing quality description information may reflect the sensing service requirement information, or vice versa.
(2) Configuring the corresponding transmission by the first session management function network element means that the UPF (such as the Sensing-UPF) with the sensing function obtains, according to QoS information corresponding to the transmission channel for transmitting the sensing data, configuration information used to configure the Sensing-UPF. The Sensing-UPF is configured to forward uplink transmitted sensing data. For example, configuring the corresponding transmission by the first session management function network element specifically includes configuring information such as a packet detection rule (packet detection rule, PDR), a forwarding action rule (forwarding action rule, FAR), and a QoS enforcement rule (QoS enforcement rule, QER).

After completing configuration, the first session management function network element may send a third response message to the sensing function network element, so as to provide the sensing function network element with at least one of the sensing quality description information or the identification information of the sensing data transmission channel. The identification information of the sensing data transmission channel is used to indicate address information of a next hop for transmitting the sensing data. For example, after collecting the sensing data, the terminal may transmit, by using the RAN and/or the AMF, the sensing data to the UPF (for example, the sensing-UPF) with the sensing function, and then the sensing-UPF transmits the sensing data to the sensing function network element. In this case, the identification information of the sensing data transmission channel includes address information of a next hop (such as sensing-UPF) for transmitting the sensing data. Optionally, a representation form of the address information of the sensing UPF is similar to that of the address information of the application function network element. For example, the address information of the sensing UPF is represented in a form of an IP address and port number information, or in a form of an FQDN. This is not limited in this application. For another example, after collecting the sensing data, the terminal may transmit, by using the RAN, the sensing data to the UPF of the PDU session established by the terminal, and then the UPF transmits the sensing data to a UPF (for example, sensing-UPF) having a sensing function. The sensing-UPF then transmits the sensing data to the sensing function network element. In this case, the identification information of the sensing data transmission channel includes address information of a next hop (such as the sensing-UPF) that transmits the sensing data. Optionally, a representation form of the address information of the sensing UPF is similar to that of the address information of the application function network element. For example, the address information of the sensing UPF is represented in a form of an IP address and port number information, or in a form of an FQDN. This is not limited in this application.

S102: The sensing function network element determines the sensing service information based on the first request message.

S103: The application function network element stores at least one of the sensing service area information, the sensing service requirement information, or the address information of the application function network element.

Among them, the sensing service information includes at least one of the following: sensing service requirement information, address information of the application function network element, list information of authorized terminals, sensing quality description information, identification information of the sensing service, or identification information of the sensing data transmission channel. Optionally, the sensing service information may also be referred to as sensing context information, which is used to describe the sensing service and its related configurations. For the description of the sensing service requirement information, the address information of the application function network element, the list information of authorized terminals, the sensing quality description information, or the identification information of the sensing data transmission channel, reference may be made to the corresponding descriptions in S101, and no further details will be provided here.

Optionally, after the sensing function network element determines the sensing service information, it may store the sensing service information.

For example, the fact that an application function network element stores at least one of the sensing service area information, the sensing service requirement information, or the address information of the application function network element may mean that the application function network element stores at least one of the sensing service area information, the sensing service requirement information, or the address information of the application function network element in a specific memory, or may mean that the application function network element has obtained at least one of the service area information, the sensing service requirement information, or the address information of the application function network element, and may use the above information in subsequent processes. This is not limited in this application.

It can be understood that the sensing function network element, the application function network element, and other related network elements (such as sensing-SMF, sensing-UPF, etc.) can achieve the sensing function in an operator's network through the interaction and information generation of the aforementioned steps. The detailed process of implementing the sensing function in combination with other related network elements or terminals will be specifically described below.

2. Example 1: Implementing the sensing function in the operator's network through interaction at the application layer and by reusing the PDU session establishment/modification procedure.

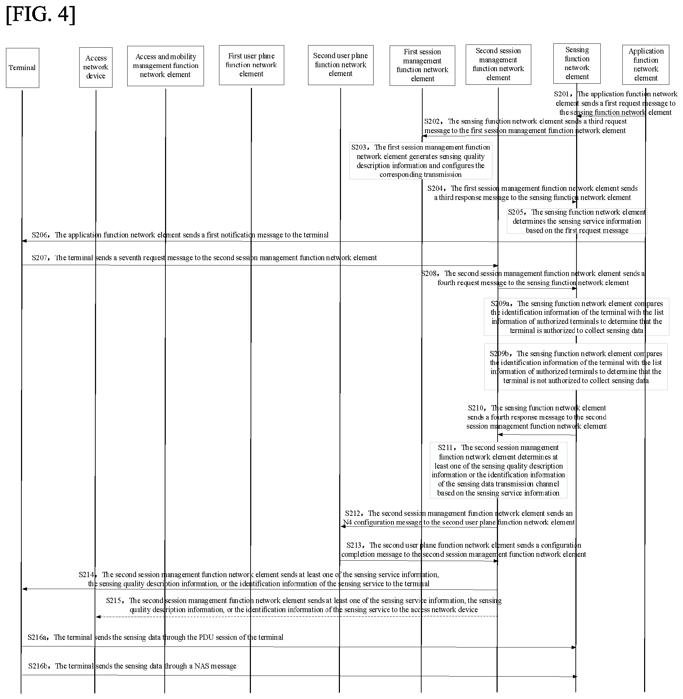

For example, FIG. 4 is a schematic flowchart of implementing a sensing function in an operator network by means of interaction at the application layer and by reusing a PDU session establishment/modification procedure according to this application. This method may be implemented through interaction between a terminal, an access network device, an access and mobility management function network element, a user plane function network element, a session management function network element, a sensing function network element, and an application function network element. The method includes the following steps:
S201: The application function network element sends a first request message to the sensing function network element; correspondingly, the sensing function network element receives the first request message.

For the specific implementation of S201, reference may be made to the corresponding description in S101. For example, the first request message is used to request the SF to establish a sensing service, and the first request message includes at least one of information about a sensing service area, information about a sensing service requirement, or address information of an application function network element, and so on, which will not be further elaborated here.

Optionally, if the first request message is used to request the establishment of a sensing service, and the application function network element then requests the SF to allocate an identifier for the sensing service through a second request message, the method further includes the following steps before S201:
(1) The application function network element sends a second request message to the sensing function network element;
(2) The sensing function network element generates identification information for the sensing service;
(3) The sensing function network element sends a second response message to the application function network element.

For example, the second request message includes the address information of the application function network element, and the identification information of the sensing service and the second response message may be understood with reference to the illustrative descriptions provided in the corresponding embodiments mentioned earlier. This will not be further elaborated here.

Optionally, the NEF is not required to participate in the process according to the above steps. When there is no NEF network element, the function of the NEF does not need to be implemented, and the AF directly sends the second request message to the SF, where the AF may be located in a trusted domain (trust domain). Alternatively, when an NEF network element is present, the AF sends the second request message to the SF through the NEF.

S202: The sensing function network element sends a third request message to the first session management function network element; correspondingly, the first session management function network element receives the third request message.

For example, the SF selects the corresponding first session management function network element (such as Sensing-SMF) based on the sensing service area information. Specifically, for instance, the SF may send the sensing service area information to the NRF (Network Repository Function) network element. The NRF then selects the first session management function network element that can support the sensing service area corresponding to the sensing service area information based on the stored NF Profile information of the Sensing-SMF, and subsequently sends a third request message to this first session management function network element, requesting the first session management function network element to generate sensing quality description information and configure the corresponding transmission.

Optionally, the sensing function network element and the first session management function network element may be independent network elements, or may be two functional modules of a single network element. For example, when the sensing function network element and the first session management function network element are independent network elements, the sensing function network element and the first session management function network element interact with each other according to the description of, for example, S202. Alternatively, when the sensing function network element and the first session management function network element are two functional modules of a single network element, the interaction between the sensing function network element and the first session management function network element is internal logic (e.g., S202 is internal logic), and the external interfaces may be uniformly replaced by the sensing function network element. In this implementation, step S202 may be optional.

S203: The first session management function network element generates sensing quality description information and configures the corresponding transmission.

For example, after receiving the third request message, the first session management function network element generates sensing quality description information (such as 5QI, ARP, GBR, MBR, etc.). Optionally, the first session management function network element allocates an address for the next hop used for uplink transmission of the sensing data, such as the address of the Sensing-UPF. Optionally, the first session management function network element obtains configuration information (such as PDR, FAR, QER, etc.) for configuring the Sensing-UPF based on the sensing quality description information.

Optionally, when the first session management function network element configures the corresponding transmission, the process further includes the following steps: The first session management function network element sends an N4x establishment/N4x modification request message to the first user plane function network element (e.g., sensing-UPF), where the request message includes configuration information for configuring the Sensing-UPF. Based on the request message, the first user plane function network element configures the corresponding rules (e.g., configuring rules such as PDR, FAR, QER, etc.). The first user plane function network element then sends an N4x establishment/N4x modification response message to the first session management function network element, where the response message indicates that the configuration of the Sensing-UPF is completed.

Optionally, the sensing function network element, the first session management function network element, and the first user plane function network element may each be an independent network element, or may be three functional modules of a single network element. For example, when the sensing function network element, the first session management function network element, and the first user plane function network element are each an independent network element, the first session management function network element and the first user plane function network element interact according to the description of, for example, S203. Alternatively, when the sensing function network element, the first session management function network element, and the first user plane function network element are three functional modules of a single network element, the interaction between the first session management function network element and the first user plane function network element is internal logic (for example, S203 is internal logic), and the external interfaces may be uniformly replaced by the sensing function network element. In this implementation, step S203 may be replaced with: the sensing function network element generates the sensing quality description information and configures the corresponding transmission, and subsequently, the sensing function network element generates the quality description information.

S204: The first session management function network element sends a third response message to the sensing function network element; correspondingly, the sensing function network element receives the third response message.

Among them, the third response message includes at least one of the sensing quality description information or the identification information of the sensing data transmission channel. For specific implementation details, refer to the corresponding descriptions provided earlier, and no further elaboration will be given here.

Step S204 is an optional step. For example, when the first session management function network element and the sensing function network element are two functional modules of a single network element, their interaction is an internal logic (e.g., S204 is internal logic).

S205: The sensing function network element determines the sensing service information based on the first request message.

For example, the sensing function network element stores sensing service information, which includes at least one of the sensing service requirement information, address information of the application function network element, a list of authorized terminals, sensing quality description information, identification information of the sensing service, or identification information of the sensing data transmission channel. For specific implementation details, refer to the corresponding descriptions provided earlier, and no further elaboration will be given here.

The execution order of S205 and S202 is not limited.

S206: The application function network element sends a first notification message to the terminal; correspondingly, the terminal receives the first notification message.

Among them, the first notification message includes at least one of the identification information of the sensing service or the address information of the sensing function network element. For specific implementation, reference may be made to the description of the identification information of the sensing service or the address information of the sensing function network element, which will not be elaborated herein again. Optionally, the first notification message further includes the address information of the first user plane function network element (such as sensing-UPF), or the address information of the sensing function network element. For specific implementation of the address information of the sensing-UPF and/or the address information of the sensing function network element, reference may be made to the implementation of the address information of the sensing function network element, for example, implemented in a combination of an IP address and a port number, or implemented in the form of FQDN information. This is not limited in this application.

Optionally, the sending of the first notification message by the application function network element to the terminal may specifically be implemented by the application function network element sending the first notification message to the terminal through an access and mobility management function network element and an access network device. For example, the following sending methods may be used:
Sending Method 1: The application function network element directly or through the NEF network element sends a second notification message to the gateway mobile location center (GMLC) network element. The second notification message includes the first information. The first information includes at least one of the identification information of the sensing service or the address information of the sensing function network element. Optionally, the first information may further include at least one of the address information of the first user plane function network element (such as sensing-UPF), the address information of the sensing function network element, or the identification information (e.g., GPSI or SUPI) of the UE. Subsequently, the GMLC network element sends a third notification message to the AMF network element, where the third notification message includes the first information; for example, the third notification message may be a Provide Sensing Information Request (Namf_Sensing_ProvideSensingInfo Request) message. The AMF network element sends a fourth notification message to the SF network element, where the fourth notification message includes the first information; for example, the fourth notification message may be a Determine Sensing Request (Nsf_Sensing_DetermineSensing Request) message. The SF network element sends a fifth notification message to the AMF network element, where the fifth notification message includes the first information; for example, the fifth notification message may be an N1N2 message transfer request (Namf_Communication_N1N2MessageTransfer Request) message. The AMF network element sends a sixth notification message to the UE through the base station, where the sixth notification message includes the first information; for example, the sixth notification message may be a downlink non-access stratum transport (DL NAS TRANSPORT) message.

Sending Method 2: The application function network element directly sends the seventh notification message to the SF network element or sends the seventh notification message to the SF network element through the NEF network element, where the seventh notification message may include the first information. Subsequently, optionally, the SF network element determines, based on the identification information (e.g., GPSI or SUPI) of the UE in the first information, an AMF network element that provides an access service for the UE (e.g., the SF obtains the identification information of the AMF network element by querying the UDM). Optionally, the SF network element sends an eighth notification message to the AMF, where the eighth notification message includes the first information. The AMF network element then sends a ninth notification message to the UE through the base station, where the ninth notification message includes the first information; for example, the ninth notification message may be a DL NAS TRANSPORT message.

Optionally, after receiving the first notification message sent by the application function network element, the terminal may directly send sensing data to the sensing function network element through the PDU session of the UE, or send the sensing data to the sensing function network element through a control plane message (e.g., an uplink non-access stratum (NAS) message). However, both methods require the terminal to reuse the PDU session establishment/modification procedure to send a request to the network for authentication and resource establishment. The following describes the steps of the procedure where the terminal reuses the PDU session establishment/modification procedure.

S207: The terminal sends a seventh request message to the second session management function network element; correspondingly, the second session management function network element receives the seventh request message.

The second session management function network element is configured to manage the PDU session of the terminal corresponding to the identification information of the terminal, which is different from the sensing-SMF. The second session management function network element may be referred to as a UE-SMF. For example, the seventh request message may be an uplink NAS transport message (such as an UL NAS transport message), where the uplink NAS transport message includes a session management (N1 session management, N1 SM) message of an N1 interface (for example, including a PDU session modification request or a PDU session establishment request, etc.). The seventh request message includes at least one of the following: identification information of the terminal, identification information of a sensing service, or address information of the sensing function network element, etc. The identification information of the terminal may be, for example, a globally unique temporary UE identity (globally unique temporary UE identity, GUTI), GPSI, a subscription permanent identifier (SUPI), a subscription concealed identifier (SUCI), an application layer ID (application layer ID), or the like; the identification information of the sensing service may be, for example, a sensing ID; the address information of the sensing function network element may be, for example, a combination of an IP address and a port number, or a sensing ID, or the like.

Optionally, after receiving the seventh request message, the second session management function network element may search for the sensing function network element corresponding to the identifier information of the sensing service based on the identifier information of the sensing service. For example, the UE-SMF sends the identifier information of the sensing service to the UDM or NRF network element, and the UDM or NRF network element determines the corresponding sensing function network element based on the identifier information of the sensing service, and sends information of the sensing function network element to the UE-SMF. The information of the sensing function network element may be, for example, address information of the sensing function network element (which may be an IP address or an FQDN), or list information of the sensing function network element (e.g., represented as an SF ID candidate list). Alternatively, if the uplink NAS transmission message sent by the UE includes the address information of the sensing function network element, the UE-SMF may directly determine the corresponding sensing function network element.

S208: The second session management function network element sends a fourth request message to the sensing function network element; correspondingly, the sensing function network element receives the fourth request message.

For example, the fourth request message may be a sensing service request message, which is used to request the acquisition of sensing service information. The fourth request message includes identification information of the sensing service and/or identification information of a terminal associated with the second session management function network element. The terminal associated with the second session management function network element refers to a terminal for which the second session management function network element can manage the PDU session. Optionally, the identification information of the terminal may be, for example, a GUTI, SUPI, SUCI, GPSI, application layer ID, or the like. Optionally, the identification information of the terminal associated with the second session management function network element may be obtained through interaction between the second session management function network element and another network element (such as a UDM network element) in the network.

For example, if the second session management function network element has already recorded the sensing service information corresponding to the identification information of the available sensing service, for instance, the identification information for the same sensing service, where the sensing function network element has already sent the sensing service information to the second session management function network element, then the second session management function network element may, in step S208, not send the fourth request message to the sensing function network element, but instead only determine that the terminal is authorized to collect the sensing data, or determine that the terminal is not authorized to collect the sensing data, and skip steps S209a, S209b, and step S210, and directly proceed to step S211.

For example, the fourth request message may include at least one of the following: identification information of the terminal, identification information of the sensing service, and the like.

Optionally, the second session management function network element may further determine that the terminal is authorized to collect sensing data, or determine that the terminal is not authorized to collect sensing data. Specifically, when the terminal requests to establish a PDU session, for example, the second session management function network element receives the PDU session create context request (Nsmf_PDUSession_CreateSMContext Request), or the second session management function network element receives the message in S207, the second session management network element obtains, from the UDM, the identification information of the sensing service for which the terminal is authorized to collect the sensing data. It should be noted that the identification information of the sensing service may be a list of identification information of the sensing service. The second session management function network element determines, based on the identification information of the sensing service for which the terminal is authorized to collect the sensing data, whether the terminal is authorized to collect the sensing data. For example, the second session management function network element compares the identification information of the sensing service from the terminal with a list, obtained from the UDM, of identification information of the sensing service in which the terminal is authorized to collect the sensing data, and checks whether the list includes the identification information of the sensing service from the terminal. If the list includes the identification information, it indicates that the terminal is authorized to collect the sensing data; or if the list does not include the identification information, it indicates that the terminal is not authorized to collect the sensing data. Optionally, the UDM may obtain, in the following manner, the list of identification information of the sensing service for which the terminal is authorized to collect the sensing data: The UDM obtains the list information of the authorized terminals from the AF side or through preconfiguration. For example, the AF may carry the authorized terminal identifier list by using the eighth request message. Specifically, the AF may provide the UDM with the correspondence between the identification information of the sensing service and the authorized UE list through the NEF by using a parameter provisioning procedure. The second session management function network element obtains, from the UDM, the list of identification information of the sensing service for which the terminal is authorized to collect the sensing data. Optionally, the UDM may internally convert the authorized terminal identifier list corresponding to the identification information of the sensing service into a list of identification information of the sensing service for which a specific terminal is authorized to collect the sensing data.

S209a: The sensing function network element compares the identification information of the terminal with the list information of authorized terminals to determine that the terminal is authorized to collect sensing data.

S209b: The sensing function network element compares the identification information of the terminal with the list information of authorized terminals to determine that the terminal is not authorized to collect sensing data.

Optionally, the fourth request message may further request the sensing function network element to perform authentication processing on the UE. For example, the authentication process performed by the sensing function network element on the terminal specifically includes the following steps:
(1) The SF obtains the identification information of the terminal from the UE-SMF;
(2) The SF obtains the list information of authorized terminals from the AF side or through pre-configuration. For example, the AF may carry the list of authorized UEs in the first request message. Alternatively, the AF may provide the list information of authorized terminals to the SF through other steps; for instance, the AF may provide the UDM with the correspondence between the identifier information of the sensing service and the list of authorized terminal identifiers through a parameter provisioning procedure via the NEF. Thereafter, the SF obtains the list of authorized terminal identifiers corresponding to the identifier information of the sensing service from the UDM.
(3) The SF compares the UE identifier with the list information of authorized terminals to determine whether the UE identified by the UE identifier is authorized to collect sensing data. For example, if the UE-SMF provides the GUTI of the UE, the SF may query the UDM for the corresponding GPSI and determine whether the terminal has passed authentication based on the GPSI information in the list information of authorized terminals. If the authentication is successful, the SF proceeds with the subsequent process; otherwise, the SF may send a failure message to the UE-SMF, which includes a cause value (for example, the GPSI of the terminal does not belong to the GPSI information in the list of authorized terminals). For instance, after S209b, the sensing function network element sends first indication information to the second session management network element, where the first indication information indicates that the terminal is not authorized to collect sensing data.

It can be understood that S209a and S209b represent two outcomes of the sensing function network element determining whether the terminal has passed authentication, and only one of these steps is actually executed in the specific implementation.

Optionally, if the first request message includes the list information of the authorized terminals, the operation of performing authentication processing on the UE by the sensing function network element may be omitted.

It should be noted that S209a or S209b is an optional step. For example, when the second session management network element needs to determine whether the terminal is authorized to collect sensing data in S208, the steps S209a or S209b do not need to be performed.

S210: The sensing function network element sends a fourth response message to the second session management function network element; correspondingly, the second session management function network element receives the fourth response message.

The fourth response message includes sensing service information. For example, the sensing service information includes at least one of the following: sensing service requirement information, address information of an application function network element, list information of authorized terminals, sensing quality description information, identification information of a sensing service, or identification information of a sensing data transmission channel. For specific implementation, refer to the corresponding descriptions in the preceding text, which will not be repeated here.

S211: The second session management function network element determines at least one of the sensing quality description information or the identification information of the sensing data transmission channel based on the sensing service information.

For example, the second session management function network element determines information such as the description information (e.g., QoS Profile) of the flow used to transmit the sensing data, and the next-hop destination address (e.g., the address information of the first user plane function network element for processing or transmitting the sensing data) for uplink transmission of the sensing data. Here, the next-hop destination address of the second user plane function network element may be the tunnel identification (tunnel ID) information (e.g., TEID, IP address, etc.) of a certain transmission channel.

For example, if the second session management function network element already has available sensing quality description information corresponding to the identification information of the sensing service, or identification information of the sensing data transmission channel (e.g., the second session management function network element has already generated sensing quality description information or identification information of the sensing data transmission channel for the identification information corresponding to the sensing service information for the same sensing service), then the second session management function network element may directly use the sensing quality description information or the identification information of the sensing data transmission channel corresponding to these available identification information of the sensing service.

S212: The second session management function network element sends an N4 configuration message to the second user plane function network element; correspondingly, the second user plane function network element receives the N4 configuration message.

For example, the N4 configuration message may include the destination address of the next hop.

S213: The second user plane function network element sends a configuration completion message to the second session management function network element; correspondingly, the second session management function network element receives the configuration completion message.

Among them, different from the sensing-UPF, the second user plane function network element may be referred to as a UE-UPF. The N4 configuration message may be implemented through an N4 session modification procedure (i.e., N4 session modification request). The N4 configuration message may include at least one of the following: a destination address of the next hop of the second user plane function network element, or configuration information of the UE-UPF (such as PDR, FAR, QER, and the like). The destination address of the next hop of the second user plane function network element may be the tunnel identification (tunnel ID) information (such as TEID, IP address, etc.) of a certain transmission channel.

S214: The second session management function network element sends at least one of the sensing service information, the sensing quality description information, or the identification information of the sensing service to the terminal.

Specifically, the second session management function network element may send one or more of the sensing service information, the sensing quality description information, and the identification information of the sensing service to the terminal through the access and mobility management function network element and the access network device.

Optionally, the following steps are further included:

S215: The second session management function network element sends at least one of the sensing service information, the sensing quality description information, or the identification information of the sensing service to the access network device.

Optionally, the sensing quality description information sent by the second session management function network element to the access network device may use the same format as the sensing quality description information sent by the second session management function network element to the terminal, or may use different formats (for example, the sensing quality description information sent by the second session management function network element to the terminal is a QoS rule, while the sensing quality description information sent by the second session management function network element to the access network device is a QoS Profile).

For example, the second session management function network element uniformly sends the information (for example, at least one of the information about the sensing service, the sensing quality description information, or the identification information of the sensing service) to be sent to the access network device, and the information (for example, at least one of the information about the sensing service, the sensing quality description information, or the identification information of the sensing service) to be sent to the terminal, to the AMF network element through the Namf_Communication_N1N2MessageTransfer message. The AMF encapsulates the information to be sent to the access network device and the information to be sent to the terminal into N2 and N1 information, respectively, and sends them to the access network device through a DL NAS Transport message. The access network device then provides the N1 information to the terminal through an RRC message.

Thereafter, for example, the terminal sends sensing data in two ways:
S216a: The terminal sends the sensing data through the PDU session of the terminal.

For example, the UE encapsulates the sensing data into a specified IP data packet, where the destination address of the IP data packet may be, for example, the address information of the sensing function network element, or the address information of the Sensing-UPF, or the address information of the second user plane function network element, and the IP data packet is finally sent to the sensing function network element through the user plane, thereby directly sending the sensing data to the sensing function network element. Optionally, the PDU session of the terminal may be a PDU session that the terminal has already established and used for interaction with the AF, or may be a PDU session that the terminal re-establishes with the AF, which is not limited in this application.

S216b: The terminal sends the sensing data through a NAS message.

In this example, a procedure for establishing a sensing service based on sensing performed by the terminal is designed. Specifically, this establishment procedure is based on sensing performed by the terminal and utilizes interaction at the application layer and the reuse of the PDU session establishment/modification procedure. Through this procedure, the sensing service requirements from the AF can be implemented by the network system in a manner based on sensing performed by the terminal.

3. Example 2: Implementing the sensing function in an operator's network through interaction at the network layer and by reusing the PDU session establishment/modification procedure.

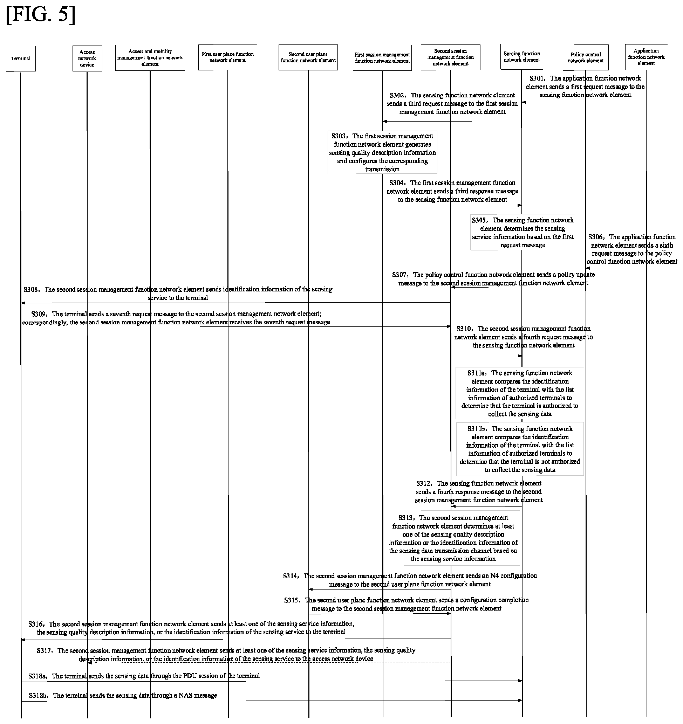

For example, FIG. 5 is a schematic flowchart illustrating a process of implementing a sensing function in an operator network through interaction at a network layer and by reusing a PDU session establishment/modification procedure according to this application. This method may be implemented through interaction among a terminal, an access network device, an access and mobility management function network element, a user plane function network element, a session management function network element, a sensing function network element, an application function network element, and a policy control function network element. The method includes the following steps:
S301: The application function network element sends a first request message to the sensing function network element; correspondingly, the sensing function network element receives the first request message.

S302: The sensing function network element sends a third request message to the first session management function network element; correspondingly, the first session management function network element receives the third request message.

S303: The first session management function network element generates sensing quality description information and configures the corresponding transmission.

S304: The first session management function network element sends a third response message to the sensing function network element; correspondingly, the sensing function network element receives the third response message.

S305: The sensing function network element determines the sensing service information based on the first request message.

For the specific implementation of S301 to S305, reference may be made to the corresponding descriptions in S201 to S205, and details will not be repeated herein.

S306: The application function network element sends a sixth request message to the policy control function network element; correspondingly, the policy control function network element receives the sixth request message.

Among them, the sixth request message includes at least one of the identification information of the sensing service or the list of terminals authorized to perform sensing. For example, the identification information of the sensing service includes a sensing service identifier (sensing ID), which is used to indicate a specific sensing service (within an operator). Optionally, the identification information of the sensing service may be represented by a combination of an operator identifier and a sensing service identifier. For instance, both the operator identifier and the sensing service identifier may be represented by one or more fields, where each field may be represented by binary, octal, decimal, or hexadecimal digits. The identification information of the terminal (UE ID) may be a GPSI, an MSISDN, an external group identifier (e.g., external group ID), or the IP address information corresponding to the PDU session of the UE.

S307: The policy control function network element sends a policy update message to the second session management function network element; correspondingly, the second session management function network element receives the policy update message.

The policy update message is used to indicate an update of a policy related to the PDU session, for example, the policy update message includes at least one of the identification information of the sensing service or the identification information of the terminal.

S308: The second session management function network element sends identification information of the sensing service to the terminal; correspondingly, the terminal receives the identification information of the sensing service.

For example, the second session management function network element sends the identification information of the sensing service to the terminal corresponding to the identification information of the terminal based on the policy update message.

S309: The terminal sends a seventh request message to the second session management network element; correspondingly, the second session management function network element receives the seventh request message.

S310: The second session management function network element sends a fourth request message to the sensing function network element; correspondingly, the sensing function network element receives the fourth request message.

S311a: The sensing function network element compares the identification information of the terminal with the list information of authorized terminals to determine that the terminal is authorized to collect the sensing data.

S311b: The sensing function network element compares the identification information of the terminal with the list information of authorized terminals to determine that the terminal is not authorized to collect the sensing data.

S312: The sensing function network element sends a fourth response message to the second session management function network element; correspondingly, the second session management function network element receives the fourth response message.

S313: The second session management function network element determines at least one of the sensing quality description information or the identification information of the sensing data transmission channel based on the sensing service information.

S314: The second session management function network element sends an N4 configuration message to the second user plane function network element; correspondingly, the second user plane function network element receives the N4 configuration message.

S315: The second user plane function network element sends a configuration completion message to the second session management function network element; correspondingly, the second session management function network element receives the configuration completion message.

S316: The second session management function network element sends at least one of the sensing service information, the sensing quality description information, or the identification information of the sensing service to the terminal.

Optionally, the following steps are also included:
S317: The second session management function network element sends at least one of the sensing service information, the sensing quality description information, or the identification information of the sensing service to the access network device.

Subsequently, the terminal sends the sensing data in either of the following two manners, for example:

S318a: The terminal sends the sensing data through the PDU session of the terminal.

S318b: The terminal sends the sensing data through a NAS message.

For specific implementations of S309 to S318b, refer to corresponding descriptions in S207 to S216b. Details are not described herein again.

In Example 2, an establishment procedure of a sensing service based on sensing performed by the terminal is designed. Specifically, the establishment procedure is based on sensing performed by the terminal, and interaction at a network layer and a PDU session establishment/modification procedure are reused. Through this procedure, the sensing service requirement from the AF can be implemented by the network system in a manner of sensing based on the terminal.

It is understandable that, in order to implement the functions described in the foregoing embodiments, the base station and the terminal include corresponding hardware structures and/or software modules for performing each function. A person skilled in the art should easily realize that, in combination with the units and method steps of the examples described in the embodiments disclosed in this application, this application can be implemented by hardware or a combination of hardware and computer software. Whether a particular function is performed by hardware or hardware driven by computer software depends on specific application scenarios and design constraints of the technical solutions.

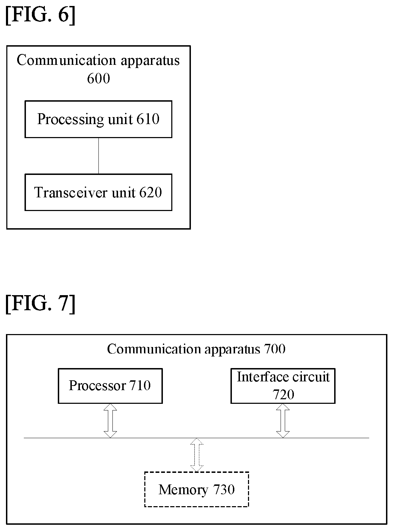

FIG. 6 and FIG. 7 are schematic structural diagrams of possible communication apparatuses according to an embodiment of this application. These communication apparatuses may be configured to implement the functions of the sensing function network element, the application function network element, the terminal, or the session management function network element in the foregoing method embodiments, and therefore can also achieve the beneficial effects provided by the foregoing method embodiments.

As shown in FIG. 6, the communication apparatus 600 includes a processing unit 610 and a transceiver unit 620. The communication apparatus 600 is configured to implement the functions of the sensing function network element, the application function network element, the terminal, or the session management function network element in the method embodiments illustrated in FIG. 3 to FIG. 5. Optionally, the transceiver unit 620 may also be referred to as a communication unit. Optionally, the transceiver unit includes a sending unit and a receiving unit, where the sending unit is configured to send a signal, and the receiving unit is configured to receive a signal.

For example, when the communication apparatus 600 is configured to implement the functions of the sensing function network element in the method embodiments illustrated in Figures 3 to 5: the transceiver unit 620 is configured to receive a first request message from an application function network element, where the first request message includes at least one of sensing service area information, sensing service requirement information, or address information of the application function network element. The processing unit 610 is configured to determine sensing service information based on the first request message, where the sensing service information includes at least one of sensing service requirement information, address information of the application function network element, a list of authorized terminals, sensing quality description information, an identifier of a sensing service, or an identifier of a sensing data transmission channel.

For another example, when the communication apparatus 600 is configured to implement the functions of the application function network element in the method embodiments illustrated in Figures 3 to 5: the transceiver unit 620 is configured to send a first request message to the sensing function network element, where the first request message includes at least one of sensing service area information, sensing service requirement information, or address information of the application function network element. The processing unit 610 is configured to store at least one of the sensing service area information, the sensing service requirement information, or the address information of the application function network element.

For another example, when the communication apparatus 600 is configured to implement the functions of the terminal in the method embodiments illustrated in FIG. 3 to FIG. 5: the transceiver unit 620 is configured to receive a first notification message from an application function network element, where the first notification message includes at least one of identification information of a sensing service or address information of a sensing function network element. The transceiver unit 620 is further configured to send sensing data.

For another example, when the communication apparatus 600 is configured to implement the functions of the session management function network element in the method embodiments illustrated in FIG. 3 to FIG. 5: the transceiver unit 620 is configured to send a fourth request message to the sensing function network element, where the fourth request message includes identification information of a sensing service and identification information of a terminal associated with the second session management function network element. The transceiver unit 620 is further configured to receive a fourth response message from the sensing function network element, where the fourth response message includes sensing service information.

For more detailed descriptions of the processing unit 610 and the transceiver unit 620 mentioned above, please refer to the SUMMARY and the relevant descriptions in the method embodiments illustrated in FIG. 3 to FIG. 5, which will not be repeated here.

As shown in FIG. 7, the communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, or store input data required for the processor 710 to run the instructions, or store data generated after the processor 710 runs the instructions. Sometimes, the interface circuit 720 may also be understood as a part of the processor 710, in which case the communication apparatus 700 includes the processor 710.

When the communication apparatus 700 is configured to implement the methods shown in FIG. 3 to FIG. 5, the processor 710 is configured to implement a function of the processing unit 610, and the interface circuit 720 is configured to implement a function of the transceiver unit 620. Optionally, when the communication apparatus 700 is configured to implement the methods shown in FIG. 3 to FIG. 5, for an implementation of the processor 710 and the interface circuit 720, refer to the corresponding descriptions in the summary and the method embodiments, and details are not described herein again.

When the aforementioned communication device is a chip applied to a sensing function network element, the chip implements the functions of the sensing function network element as described in the method embodiments. The chip receiving information from other network elements may be understood as the information first being received by other modules (such as a radio frequency module or an antenna) within the sensing function network element, and then being sent by these modules to the chip. The chip sending information to other network elements may be understood as the information first being sent to other modules (such as a radio frequency module or an antenna) within the sensing function network element, and then being sent by these modules to other network elements.

When the communication device mentioned above is a chip applied to an application function network element, the chip implements the functions of the application function network element as described in the method embodiments. The chip receiving information from other network elements may be understood as the information first being received by other modules (such as a radio frequency module or an antenna) within the application function network element, and then being sent by these modules to the chip. The chip sending information to other network elements may be understood as the information first being sent to other modules (such as a radio frequency module or an antenna) within the application function network element, and then being sent by these modules to other network elements.

When the communication apparatus mentioned above is a chip of a terminal, the chip implements the functions of the terminal as described in the method embodiments. The chip receiving information from other network elements may be understood as the information being first received by other modules (such as a radio frequency module or an antenna) within the terminal, and then transmitted to the chip by these modules. The chip sending information to other network elements may be understood as the information being first sent to other modules (such as a radio frequency module or an antenna) within the terminal, and then transmitted to other network elements by these modules.

When the communication apparatus mentioned above is a chip of a session management function network element, the chip implements the functions of the session management function network element as described in the method embodiments. The chip receiving information from other network elements may be understood as the information being first received by other modules (such as a radio frequency module or an antenna) within the session management function network element, and then transmitted to the chip by these modules. The chip sending information to other network elements may be understood as the information being first sent to other modules (such as a radio frequency module or an antenna) within the session management function network element, and then transmitted to other network elements by these modules.

In this application, when entity A sends information to entity B, the information may be sent directly from A to B, or may be sent from A to B indirectly through another entity. Similarly, when entity B receives information from entity A, the information may be received directly by entity B from entity A, or may be received by entity B from entity A indirectly through another entity. Here, entities A and B may be sensing function network elements, application function network elements, terminals, or session management function network elements, or may be modules within sensing function network elements, application function network elements, terminals, or session management function network elements. The sending and receiving of information may involve information exchange between sensing function network elements, application function network elements, terminals, or session management function network elements, for example, information exchange between a terminal and an application function network element; the sending and receiving of information may also involve information exchange between two terminals; or the sending and receiving of information may involve information exchange between different modules within an apparatus, for example, information exchange between a terminal chip and other modules of the terminal.

It is understandable that the processor in the embodiments of this application may be a central processing unit (CPU), or may be another general-purpose processor, a digital signal processor (DSP), an application-specific integrated circuit (ASIC), a field programmable gate array (FPGA) or another programmable logic device, a transistor logic device, a hardware component, or any combination thereof. The general-purpose processor may be a microprocessor, or may be any conventional processor.

The method steps in the embodiments of this application may be implemented in hardware, or may be implemented in software instructions that are executable by a processor. The software instructions may include corresponding software modules, which may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example of a storage medium is coupled to a processor, enabling the processor to read information from the storage medium and write information into the storage medium. The storage medium may also be a component of the processor. The processor and the storage medium may be located in an ASIC. In addition, the ASIC may be located in a base station or a terminal. The processor and the storage medium may alternatively exist in a base station or a terminal as discrete components.

In the foregoing embodiments, the embodiments may be implemented entirely or partially by software, hardware, firmware, or any combination thereof. When software is used to implement the embodiments, the embodiments may be implemented entirely or partially in the form of a computer program product. The computer program product includes one or more computer programs or instructions. When the computer program or the instruction is loaded and executed on a computer, the procedures or functions described in the embodiments of this application are performed entirely or partially. The computer may be a general-purpose computer, a dedicated computer, a computer network, a network device, user equipment, or another programmable apparatus. The computer program or the instruction may be stored in a computer-readable storage medium, or may be transmitted from one computer-readable storage medium to another computer-readable storage medium. For example, the computer program or the instruction may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, such as a floppy disk, a hard disk drive, or a magnetic tape; an optical medium, such as a digital video disc; or a semiconductor medium, such as a solid state disk. The computer-readable storage medium may be a volatile or a non-volatile storage medium, or may include both a volatile and a non-volatile storage medium.

In the various embodiments of this application, unless otherwise specified or there is a logical conflict, terms and/or descriptions between different embodiments are consistent and may be mutually referenced. Technical features in different embodiments may be combined to form a new embodiment based on their inherent logical relationships.

It may be understood that the various numerical designations in the embodiments of this application are merely for the purpose of differentiation for ease of description, and are not intended to limit the scope of the embodiments of this application. The sequence numbers of the foregoing processes do not imply the order of execution, and the order of execution of the processes should be determined according to their functions and internal logic.

## Claims

1. A communication method, comprising:
receiving, by a sensing function network element, a first request message from an application function network element, wherein the first request message comprises at least one of sensing service area information, sensing service requirement information, or address information of the application function network element; and
determining, by the sensing function network element, sensing service information based on the first request message, wherein the sensing service information comprises at least one of the sensing service requirement information, the address information of the application function network element, list information of authorized terminals, sensing quality description information, identification information of a sensing service, or identification information of a sensing data transmission channel.

2. The method according to claim 1, wherein before the receiving, by the sensing function network element, the first request message from the application function network element, the method further comprises:
receiving, by the sensing function network element, a second request message from the application function network element, wherein the second request message is used to request identification information of a sensing service;
generating, by the sensing function network element, the identification information of the sensing service, wherein the identification information of the sensing service is used to identify the sensing service or a sensing session corresponding to the sensing service; and
sending, by the sensing function network element, a second response message to the application function network element, wherein the second response message comprises at least one of the identification information of the sensing service or address information of the sensing function network element.

3. The method according to claim 1, wherein after the receiving, by the sensing function network element, the first request message from the application function network element, the method further comprises:
generating, by the sensing function network element, identification information of a sensing service based on the first request message, wherein the identification information of the sensing service is used to identify the sensing service or a sensing session corresponding to the sensing service; and
sending, by the sensing function network element, a first response message to the application function network element, wherein the first response message comprises at least one of the identification information of the sensing service or address information of the sensing function network element.

4. The method according to claim 1, wherein the method further comprises:
sending, by the sensing function network element, a third request message to a first session management function network element, wherein the third request message is used to request the first session management function network element to generate sensing quality description information and configure corresponding transmission, the first session management function network element is determined based on the sensing service area information, and the first session management function network element has a sensing function; and
receiving, by the sensing function network element, a third response message from the first session management function network element, wherein the third response message comprises at least one of the sensing quality description information or the identification information of the sensing data transmission channel.

5. The method according to any one of claims 1 to 4, wherein the method further comprises:
receiving, by the sensing function network element, a fourth request message from a second session management function network element, wherein the fourth request message comprises identification information of a sensing service and identification information of a terminal associated with the second session management function network element; and
sending, by the sensing function network element, a fourth response message to the second session management function network element, wherein the fourth response message comprises the sensing service information.

6. The method according to claim 5, wherein the first request message further comprises list information of authorized terminals.

7. The method according to claim 6, wherein the method further comprises:
performing, by the sensing function network element, authentication processing on the terminal based on the identification information of the terminal associated with the second session management function network element and the list information of authorized terminals.

8. A communication method, comprising:
sending, by an application function network element, a first request message to a sensing function network element, wherein the first request message comprises at least one of sensing service area information, sensing service requirement information, or address information of the application function network element; and
storing, by the application function network element, at least one of the sensing service area information, the sensing service requirement information, or the address information of the application function network element.

9. The method according to claim 8, wherein before the sending, by the application function network element, the first request message to the sensing function network element, the method further comprises:
sending, by the application function network element, a second request message to the sensing function network element, wherein the second request message is used to request identification information of a sensing service; and
receiving, by the application function network element, a second response message from the sensing function network element, wherein the second response message comprises at least one of the identification information of the sensing service or address information of the sensing function network element.

10. The method according to claim 8, wherein the method further comprises:
sending, by the application function network element, a fifth request message to a network exposure function network element, wherein the fifth request message comprises list information of authorized terminals.

11. The method according to any one of claims 8 to 10, wherein the method further comprises:
sending, by the application function network element, a first notification message to a terminal, wherein the first notification message comprises at least one of identification information of a sensing service or address information of the sensing function network element.

12. The method according to claim 8, wherein the method further comprises:
sending, by the application function network element, a sixth request message to a policy control function network element, wherein the sixth request message comprises at least one of identification information of a sensing service or a list of terminals authorized to perform device-side sensing.

13. A communication method, comprising:
receiving, by a terminal, a first notification message from an application function network element, wherein the first notification message comprises at least one of identification information of a sensing service or address information of a sensing function network element; and
sending, by the terminal, sensing data.

14. The method according to claim 13, wherein the sending, by the terminal, sensing data comprises:
sending, by the terminal, the sensing data to the sensing function network element through a first session used for interaction with the application function network element.

15. The method according to claim 13, wherein the method further comprises:
sending, by the terminal, a seventh request message to a second session management network element, wherein the seventh request message comprises at least one of identification information of the terminal, the identification information of the sensing service, or the address information of the sensing function network element; and
receiving, by the terminal, a seventh response message, wherein the seventh response message comprises at least one of the identification information of the sensing service, sensing service requirement information, or the address information of the sensing function network element.

16. A communication apparatus, comprising a communication unit and a processing unit, wherein the communication unit and the processing unit are configured to perform the method according to any one of claims 1 to 7, or claims 8 to 12, or claims 13 to 15.

17. A communication apparatus, comprising a processor and an interface circuit, wherein the interface circuit is configured to receive a signal from another communication apparatus and transmit the signal to the processor or send a signal from the processor to another communication apparatus, and the processor, through a logic circuit or by executing code instructions, is configured to implement the method according to any one of claims 1 to 7, or claims 8 to 12, or claims 13 to 15.

18. A computer-readable storage medium, wherein the computer-readable storage medium stores a computer program or instructions, and when the computer program or instructions are executed by a communication apparatus, the method according to any one of claims 1 to 7, or claims 8 to 12, or claims 13 to 15 is implemented.

19. A chip system, wherein the chip system comprises a processor and an interface, and the processor is configured to execute a computer program, so that the chip system implements the method according to any one of claims 1 to 7, or claims 8 to 12, or claims 13 to 15.

20. A computer program product, comprising instructions, wherein when the instructions are run on a computer, the computer is enabled to perform the method according to any one of claims 1 to 7, or claims 8 to 12, or claims 13 to 15.
